# FASCICULE DE BREVET EUROPEEN

(11) **EP 4 565 336 B1**
(45) Date de publication et mention de la délivrance du brevet: **29.07.2026**
(21) Numéro de dépôt: 23745619.9
(22) Date de dépôt: 23.06.2023
(51) Int. Cl.: B60Q 1/04, A62C 3/07, A62C 3/16, B60Q 1/00, B60Q 1/26

(54) **VEHICULE A PROPULSION ELECTRIQUE ET PROCEDE D'EXTINCTION D'UN INCENDIE DE SA BATTERIE DE PROPULSION**
ELEKTRISCH ANGETRIEBENES FAHRZEUG UND VERFAHREN ZUM LÖSCHEN EINES BRANDES IN SEINER ANTRIEBSBATTERIE
ELECTRICALLY PROPELLED VEHICLE AND METHOD FOR EXTINGUISHING A FIRE IN ITS PROPULSION BATTERY

(30) Priorité: 04.08.2022 FR 2208085
(43) Date de publication de la demande: 11.06.2025
(73) Titulaire: Stellantis Auto SAS, 78300 Poissy (FR)
(72) Inventeur: ROUSSEAU, Xavier, 91220 Bretigny (FR); TIXIER, Julien, 78460 Chevreuse (FR); MERCIER, Jacques, 92200 Neuilly sur Seine (FR); GOHIER, Gael, 91190 Gif sur Yvette (FR)
(74) Mandataire: PSIP
(86) Numéro de dépôt international: PCT/FR2023/050951
(87) Numéro de publication internationale: WO 2024/028545

(56) Documents cités:
- FR-A1- 3 002 910
- JP-A- 2013 135 720

## Description

L'invention concerne un véhicule automobile à propulsion électrique et un procédé d'extinction d'un incendie d'une batterie de propulsion dudit véhicule.

Le document US20220161077-A1 décrit un véhicule automobile à propulsion électrique comprenant :
- une batterie d'alimentation du moteur de propulsion dudit véhicule,
- une carrosserie pourvue d'une zone d'accès latérale à ladite batterie permettant l'injection d'eau sous pression pour éteindre un incendie de ladite batterie.

Le document JP5849692-B2 décrit un véhicule automobile à propulsion électrique comprenant :
- une batterie d'alimentation du moteur de propulsion dudit véhicule,
- une carrosserie pourvue d'un orifice d'introduction d'eau sous pression en cas d'incendie de ladite batterie, ledit orifice étant situé sous une trappe,
- un conduit s'étendant entre ledit orifice et ledit bac, de manière à permettre à l'eau sous pression d'être acheminée pour noyer ladite batterie.

Le document FR3002910A1 décrit une structure porteuse pour un véhicule hybride ou électrique, comportant des corps creux formant des canaux qui se trouvent à proximité d'un compartiment contenant des batteries de traction, comportant d'une part un moyen d'accès extérieur permettant un remplissage des canaux par un fluide d'extinction d'un incendie, et d'autre part des orifices de diffusion de ce fluide à partir de ces canaux, vers le compartiment des batteries.

Dans ces réalisations, l'orifice d'introduction d'eau sous pression n'est pas toujours aisément accessible, notamment quand il est occulté par une trappe qui doit être soit actionnée en ouverture - ce qui requiert une manipulation dangereuse de la part de l'opérateur d'extinction de l'incendie - soit détruite par le feu ou par ledit opérateur - ce qui est difficile à réaliser en situation d'urgence, notamment quand ladite trappe est métallique.

L'invention a pour but de pallier ces inconvénients.

A cet effet, et selon un premier aspect, l'invention concerne un véhicule automobile à propulsion électrique comprenant :
- une batterie d'alimentation du moteur de propulsion dudit véhicule, ladite batterie étant logée dans un bac sensiblement étanche,
- une carrosserie pourvue d'un orifice de réception d'eau sous pression en cas d'incendie de ladite batterie,
- un conduit étanche s'étendant entre ledit orifice et ledit bac, de manière à permettre à l'eau sous pression d'être acheminée pour noyer ladite batterie,
- un module de feu de signalisation à base de matériau thermoplastique, ledit module comprenant une embase et une vitre délimitant un espace de logement d'un moyen d'éclairage,
ledit orifice étant localisé derrière ledit module, de manière à pouvoir être accessible après destruction dudit module par un choc et/ou par le feu.

Avec un tel agencement, l'orifice est rendu aisément accessible, ceci de par la nature thermoplastique du module de feu de signalisation qui permet sa destruction aisée par un choc et/ou par le feu.

En outre, comme on le verra plus loin, un tel agencement permet de ménager une distance de sécurité entre l'opérateur d'extinction de l'incendie et le véhicule.

Selon une réalisation, l'orifice est relié au conduit par une conduite rigide.

Selon une réalisation, le conduit est occulté du côté de l'orifice par un bouchon, de manière à protéger la batterie des fluides et poussières lors de l'utilisation du véhicule.

En particulier, le bouchon est en matériau thermoplastique, de manière à pouvoir être détruit par un choc et/ou par le feu pour donner accès au conduit.

Selon divers modes de réalisation, la matière du conduit est choisie parmi les matériaux suivants :
- en matériau rigide,
- ou en matériau souple, de sorte que ledit conduit puisse être déformé lors de son montage,
- ou en matériau rigide présentant des zones amincies de manière à permettre une déformation plastique au niveau desdites zones, de sorte que ledit conduit puisse être déformé lors de son montage.

Selon une réalisation, l'orifice présente une dimension minimale supérieure ou égale à 50 mm, de manière à pouvoir recevoir un jet d'eau sous pression de diamètre analogue à ladite dimension.

Selon un deuxième aspect, l'invention concerne un procédé d'extinction d'un incendie de batterie d'un tel véhicule, ledit procédé comprenant les étapes suivantes :
- détruire, par un choc et/ou par le feu, le module de feu de signalisation localisé devant l'orifice d'introduction d'eau sous pression,
- braquer un jet d'eau sous pression en regard dudit orifice mis en état non occulté, ledit jet s'étendant selon une longueur supérieure à 500 mm, de manière à permettre de maintenir une distance de sécurité entre l'opérateur d'extinction de l'incendie et ledit véhicule,
- remplir d'eau par ledit jet le bac de logement de ladite batterie.

En particulier, quand le conduit est occulté par un bouchon, le procédé comprend en outre une étape de retrait dudit bouchon avant le braquage du jet d'eau sous pression.

L'invention sera davantage détaillée par la description de modes de réalisation non limitatifs, sur la base de :

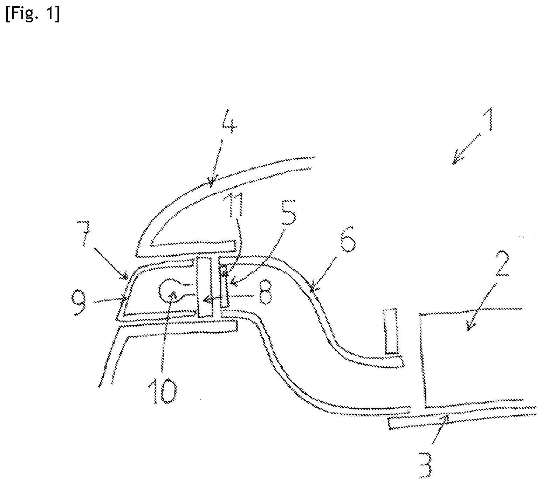

[Fig.1] qui est une représentation schématique en coupe partielle d'un véhicule selon une réalisation.

On décrit à présent, en références à la figure 1, un véhicule 1 automobile à propulsion électrique comprenant :
- une batterie 2 d'alimentation du moteur, non représenté, de propulsion dudit véhicule, ladite batterie étant logée dans un bac 3 sensiblement étanche,
- une carrosserie 4 pourvue d'un orifice 5 de réception d'eau sous pression en cas d'incendie de ladite batterie,
- un conduit 6 étanche s'étendant entre ledit orifice et ledit bac, de manière à permettre à l'eau sous pression d'être acheminée pour noyer ladite batterie,
- un module 7 de feu de signalisation - notamment avant ou arrière - à base de matériau thermoplastique, ledit module comprenant une embase 8 - formant notamment un réflecteur - et une vitre 9 délimitant un espace de logement d'un moyen d'éclairage 10 - par exemple sous forme d'ampoule à incandescence ou de diode -,
ledit orifice étant localisé derrière ledit module, de manière à pouvoir être accessible après destruction dudit module par un choc et/ou par le feu.

Selon une réalisation non représentée, on peut prévoir une pluralité de conduits 6 disposés derrière une pluralité de modules 7 respectifs de feu de signalisation, de manière à permettre une extinction d'incendie selon une pluralité de zones du véhicule 1.

Selon une réalisation non représentée, l'orifice 5 est relié au conduit 6 par une conduite rigide, dénommée usuellement « colonne sèche ».

Selon la réalisation représentée, le conduit 6 est occulté du côté de l'orifice 5 par un bouchon 11.

En particulier, le bouchon 11 est en matériau thermoplastique.

Selon divers modes de réalisation, le conduit 6 est au choix :
- en matériau rigide, notamment en métal afin de résister à la chaleur et/ou à la flamme,
- ou en matériau souple, notamment en caoutchouc, de sorte que ledit conduit puisse être déformé lors de son montage,
- ou en matériau rigide, notamment en en métal afin de résister à la chaleur et/ou à la flamme, présentant des zones amincies de manière à permettre une déformation plastique au niveau desdites zones, de sorte que ledit conduit puisse être déformé lors de son montage.

Selon une réalisation, l'orifice 5 présente une dimension minimale supérieure ou égale à 50 mm, de manière à pouvoir recevoir un jet d'eau sous pression de diamètre analogue à ladite dimension, qui correspond à un diamètre standard pour les lances à incendie usuellement utilisées. A titre d'exemples, l'orifice 5 peut être circulaire et de diamètre supérieur ou égal à 50 mm, ou encore oblong avec sa plus petite dimension étant supérieure ou égale à 50 mm.

On décrit à présent un procédé d'extinction d'un incendie de batterie 2 d'un tel véhicule 1, ledit procédé comprenant les étapes suivantes :
- détruire, par un choc et/ou par le feu, le module 7 de feu de signalisation localisé devant l'orifice 5 de réception d'eau sous pression,
- braquer un jet d'eau sous pression en regard dudit orifice mis en état non occulté, ledit jet s'étendant selon une longueur supérieure à 500 mm, de manière à permettre de maintenir une distance de sécurité entre l'opérateur d'extinction de l'incendie et ledit véhicule,
- remplir d'eau par ledit jet le bac 3 de logement de ladite batterie.

En particulier, quand le conduit 6 est occulté par un bouchon 11, le procédé comprend en outre une étape de retrait - notamment destructif par un choc et/ou par le feu - dudit bouchon avant le braquage du jet d'eau sous pression.

On notera enfin que l'agencement selon l'invention permet un remplissage très rapide du bac 3. A titre d'exemple, le temps de remplissage d'un bac 3 d'une contenance de 100 litres est, dans le cas d'une lance à incendie débitant de l'eau sous pression selon un débit de 500 litres/minute, de seulement 12 secondes, ce qui permet une maîtrise rapide de l'incendie.

## Revendications

1. Véhicule (1) automobile à propulsion électrique comprenant :
- une batterie (2) d'alimentation du moteur de propulsion dudit véhicule, ladite batterie étant logée dans un bac (3) sensiblement étanche,
- une carrosserie (4) pourvue d'un orifice (5) de réception d'eau sous pression en cas d'incendie de ladite batterie,
- un conduit (6) étanche s'étendant entre ledit orifice (5) et ledit bac (3), de manière à permettre à l'eau sous pression d'être acheminée pour noyer ladite batterie (2),
- un module (7) de feu de signalisation à base de matériau thermoplastique, ledit module (7) comprenant une embase (8) et une vitre (9) délimitant un espace de logement d'un moyen d'éclairage (10), ledit véhicule (1) étant tel que ledit orifice (5) est localisé derrière ledit module (7), de manière à pouvoir être accessible après destruction dudit module (7) par un choc et/ou par le feu.

2. Véhicule (1) selon la revendication 1, **caractérisé en ce que** l'orifice (5) est relié au conduit (6) par une conduite rigide.

3. Véhicule (1) selon l'une quelconque des revendications 1 ou 2, **caractérisé en ce que** le conduit (6) est occulté du côté de l'orifice (5) par un bouchon (11).

4. Véhicule (1) selon la revendication 3, **caractérisé en ce que** le bouchon (11) est en matériau thermoplastique.

5. Véhicule (1) selon l'une quelconque des revendications 1 à 4, **caractérisé en ce que** la matière du conduit (6) est choisie parmi les matériaux suivants :
- en matériau rigide,
- ou en matériau souple, de sorte que ledit conduit (6) puisse être déformé lors de son montage,
- ou en matériau rigide présentant des zones amincies de manière à permettre une déformation plastique au niveau desdites zones, de sorte que ledit conduit (6) puisse être déformé lors de son montage.

6. Véhicule (1) selon l'une quelconque des revendications 1 à 5, **caractérisé en ce que** l'orifice (5) présente une dimension minimale supérieure ou égale à 50 mm, de manière à pouvoir recevoir un jet d'eau sous pression de diamètre analogue à ladite dimension.

7. Procédé d'extinction d'un incendie de batterie (2) d'un véhicule (1) selon l'une quelconque des revendications 1 à 6, ledit procédé comprenant les étapes suivantes :
- détruire, par un choc et/ou par le feu, le module (7) de feu de signalisation localisé devant l'orifice (5) de réception d'eau sous pression,
- braquer un jet d'eau sous pression en regard dudit orifice (5) mis en état non occulté, ledit jet s'étendant selon une longueur supérieure à 500 mm, de manière à permettre de maintenir une distance de sécurité entre l'opérateur d'extinction de l'incendie et ledit véhicule (1),
- remplir d'eau par ledit jet le bac (3) de logement de ladite batterie (2).

8. Procédé selon la revendication 7, quand elle se rattache à l'une quelconque des revendications 3 ou 4, ledit procédé comprenant en outre une étape de retrait du bouchon (11) avant le braquage du jet d'eau sous pression.

## Patentansprüche

1. Kraftfahrzeug (1) mit Elektroantrieb, bestehend aus:
- eine Batterie (2) zur Versorgung des Antriebsmotors des Fahrzeugs, wobei die Batterie in einem im Wesentlichen wasserdichten Behälter (3) untergebracht ist,
- einem Aufbau (4) mit einer Öffnung (5) zur Aufnahme von Druckwasser bei einem Brand in der Batterie,
- eine abgedichtete Leitung (6), die sich zwischen der Öffnung (5) und dem Behälter (3) erstreckt, sodass unter Druck stehendes Wasser zum Einbetten der Batterie (2) zugeführt werden kann,
- Lichtsignalmodul (7) aus thermoplastischem Material, wobei das Lichtsignalmodul (7) einen Sockel (8) und eine Scheibe (9) umfasst, die einen Aufnahmeraum einer Beleuchtungseinrichtung (10) begrenzen,
Das Fahrzeug (1) ist so beschaffen, dass die Öffnung (5) hinter dem Modul (7) so angeordnet ist, dass sie nach Zerstörung des Moduls (7) durch einen Aufprall und/oder Feuer zugänglich ist.

2. Fahrzeug (1) nach Anspruch 1, **dadurch gekennzeichnet, dass** die Öffnung (5) über eine starre Leitung mit der Leitung (6) verbunden ist.

3. Fahrzeug (1) nach einem der Ansprüche 1 oder 2, **dadurch gekennzeichnet, dass** die Leitung (6) auf der Seite der Öffnung (5) durch einen Stopfen (11) verdeckt ist.

4. Fahrzeug (1) nach Anspruch 3, **dadurch gekennzeichnet, dass** der Stopfen (11) aus thermoplastischem Material besteht.

5. Fahrzeug (1) nach einem der Ansprüche 1 bis 4, **dadurch gekennzeichnet, dass** das Material des Kanals (6) aus folgenden Materialien ausgewählt ist:
- aus starrem Werkstoff,
- oder aus biegsamem Material, sodass der Kanal (6) bei seiner Montage verformbar ist,
- oder aus starrem Material mit verjüngten Bereichen, sodass eine plastische Verformung an diesen Bereichen möglich ist, sodass der Kanal (6) bei seiner Montage verformt werden kann.

6. Fahrzeug (1) nach einem der Ansprüche 1 bis 5, **dadurch gekennzeichnet, dass** die Öffnung (5) eine minimale Abmessung von größer oder gleich 50 mm aufweist, sodass ein Wasserstrahl unter Druck mit einem Durchmesser ähnlich dieser Abmessung aufgenommen werden kann.

7. Verfahren zum Löschen eines Batteriebrandes (2) eines Fahrzeugs (1) nach einem der Ansprüche 1 bis 6, wobei das Verfahren die folgenden Schritte umfasst:
- durch einen Aufprall und/oder Feuer das vor der Druckwasseraufnahme-Öffnung (5) befindliche Signalleuchtenmodul (7) zerstören,
- einen Wasserstrahl unter Druck gegen die Auslassöffnung (5) zu richten, der sich in einem nicht verdeckten Zustand befindet und eine Länge von mehr als 500 mm hat, sodass ein sicherer Abstand zwischen dem Löschpersonal und dem Fahrzeug (1) aufrechterhalten werden kann,
- Der Behälter (3) zur Aufnahme der Batterie (2) wird mit Wasser gefüllt.

8. Verfahren nach Anspruch 7, wenn es sich auf einen der Ansprüche 3 oder 4 bezieht, wobei das Verfahren ferner einen Schritt des Entfernens des Stopfens (11) vor dem Einlenken des Wasserstrahls unter Druck umfasst.

## Claims

1. Electric-powered motor vehicle (1) comprising:
- battery (2) for powering the propulsion engine of said vehicle, said battery being housed in a substantially sealed tray (3),
- bodywork (4) provided with an orifice (5) for receipt of pressurised water in the event of fire of said battery,
- sealed conduit (6) extending between said orifice (5) and said tray (3), so as to allow the pressurised water to be conveyed to drown said battery (2),
- signalling light unit (7) made of thermoplastic material, said unit (7) comprising a base (8) and a window (9) defining a space for housing a lighting means (10),
said vehicle (1) being such that said orifice (5) is located behind said module (7), so as to be accessible after destruction of said module (7) by an impact and/or by fire.

2. Vehicle (1) according to claim 1, **characterised in that** the orifice (5) is connected to the duct (6) by a rigid duct.

3. Vehicle (1) according to either of Claims 1 and 2, wherein the conduit (6) is blocked from the side of the orifice (5) by a plug (11).

4. Vehicle (1) according to claim 3, **characterised in that** the cap (11) is made of thermoplastic material.

5. Vehicle (1) according to any one of Claims 1 to 4, **characterised in that** the material of the conduit (6) is chosen from the following materials:
- made of rigid material,
- or made of flexible material, so that said conduit (6) can be deformed during its assembly line,
- or made of a rigid material having thinned zones so as to allow plastic deformation on the level of said zones, so that said pipe (6) can be deformed during its assembly line.

6. Vehicle (1) according to any one of claims 1 to 5, **characterised in that** the orifice (5) has a minimum size greater than or equal to 50 mm, so as to be able to receive a jet of pressurised water of a diameter similar to said size.

7. Method for extinguishing a battery fire (2) of a vehicle (1) according to any one of Claims 1 to 6, said method comprising the following steps:
- destroying, by impact and/or fire, the signalling lamp unit (7) located in front of the pressurised water receipt orifice (5),
- deflecting a jet of pressurised water facing said orifice (5) placed in unobscured status, said jet extending over a length greater than 500 mm, so as to make it possible to keep a safety distance between the fire extinguishing operator and said vehicle (1),
- filling the housing tray (3) of said battery (2) with water by said jet.

8. Method according to claim 7, when it is related to any one of claims 3 or 4, said method further comprising a step of removing the plug (11) before deflecting the pressurised water jet.
